**Europäisches Patentamt**

**European Patent Office**

**Office européen des brevets**

(19)

(11) Numéro de publication : **0 149 373**
**B1**

(12)

# FASCICULE DE BREVET EUROPÉEN

(45) Date de publication du fascicule du brevet :
09.09.87

(51) Int. Cl.⁴ : **F 16 K 43/00**, F 16 K 21/10, F 16 K 11/074

(21) Numéro de dépôt : **84402105.5**

(22) Date de dépôt : **19.10.84**

(54) Robinet mélangeur.

(30) Priorité : **28.10.83 FR 8317263**

(43) Date de publication de la demande :
**24.07.85 Bulletin 85/30**

(45) Mention de la délivrance du brevet :
**09.09.87 Bulletin 87/37**

(84) Etats contractants désignés :
**AT BE CH DE GB IT LI LU NL SE**

(56) Documents cités :
CH-A- 112 260
DE-A- 2 543 112
FR-A- 1 136 598
FR-A- 2 459 930
GB-A- 202 053
GB-A- 1 504 139
US-A- 3 003 519

(73) Titulaire : **LES ROBINETS PRESTO Société anonyme dite:**
**7, rue Racine**
**F-92120 Montrouge (FR)**

(72) Inventeur : **Delbare, Pierre Albert**
**39, rue de la Voie Verte**
**F-91260 Juvisy Sur Orge (FR)**

(74) Mandataire : **Vander-Heym, Roger**
**172 Boulevard Voltaire**
**F-75011 Paris (FR)**

Jouve, 18, rue St-Denis, 75001 Paris, France

## Description

La présente invention est relative à un robinet mélangeur du genre de celui décrit et représenté dans le brevet Français N° 2 459 930 déposé le 26 Juin 1979 au nom de la demanderesse, c'est-à-dire un robinet comportant, notamment, une tête d'entraînement mobile en rotation et axialement, la rotation étant utilisée pour régler le mélange et le déplacement axial étant utilisé pour ouvrir le clapet porté par un piston délimitant, avec un boîtier, une chambre de temporisation communiquant avec l'arrivée d'eau mitigée par l'entremise d'un trou calibré.

Un tel robinet présentait deux embouts prévus sur le corps sur lequel étaient raccordées la canalisation d'eau chaude et celle d'eau froide, chacun desdits embouts comportant un clapet anti-retour et un filtre.

De ce fait, l'accès à ces deux pièces, notamment, nécessitait l'interruption des arrivées d'eau et le démontage des canalisations avec tous les inconvénients que cela comportait à chaque fois qu'une intervention était nécessaire sur un robinet.

D'une façon générale, toutes les interventions sur les organes du robinet telles que réglage du débit, changement du clapet, etc. nécessitaient l'interruption de l'alimentation générale.

La présente invention, qui remédie à ces inconvénients, est remarquable en ce que la cartouche est constituée par un boîtier pourvu d'un fond et renferme, outre le clapet du robinet et le mécanisme de temporisation, les clapets anti-retour et les filtres et en ce que les canalisations d'arrivée d'eau chaude et d'eau froide se raccordent au robinet par l'entremise de clapets à bille poussés contre leur siège en position fermée par la pression de l'eau, lesdits clapets à bille étant logés dans le corps du robinet et l'ouverture desdits clapets à bille étant réalisée par la mise en place de la cartouche.

De la façon connue, la cartouche précitée est maintenue dans le corps par l'entremise d'un écrou épaulé usuel.

L'invention sera mieux comprise par la description qui va suivre, faite en se référant aux dessins annexés, à titre d'exemple indicatif seulement, sur lesquels :

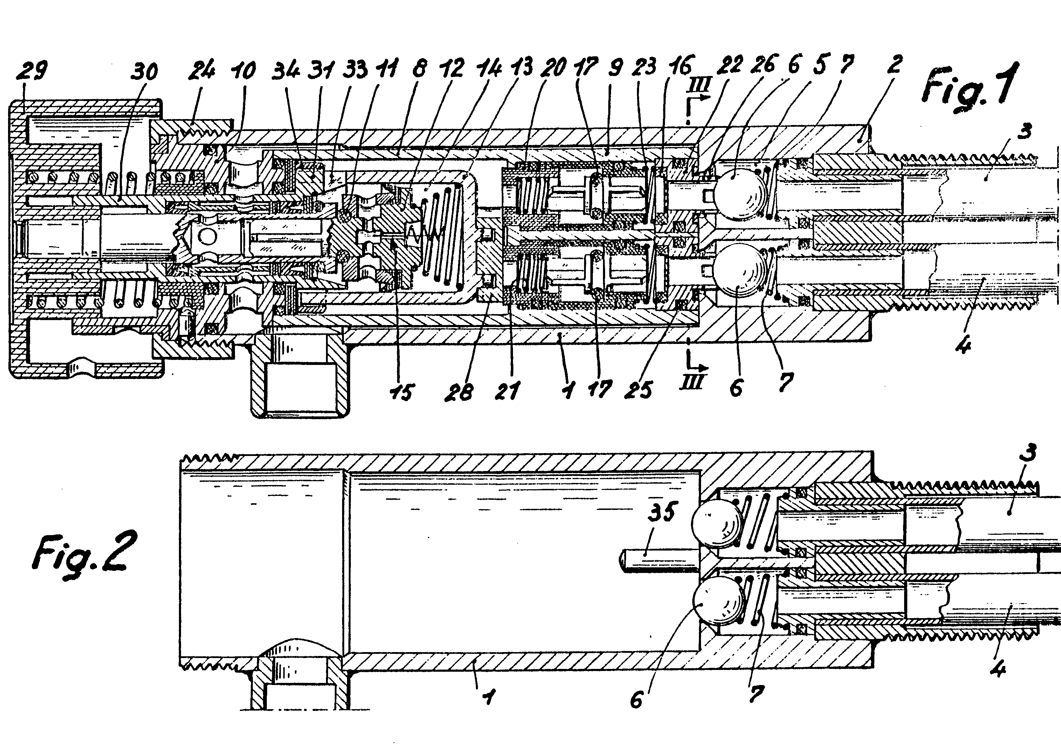

La figure 1 est une vue en coupe longitudinale d'un robinet mélangeur conforme à l'invention ;

La figure 2 est une vue analogue à la figure 1 montrant le corps du robinet seul ;

La figure 3 est une vue en coupe effectuée selon la ligne III-III de la figure 1 ;

La figure 4 est une vue partielle et à plus grande échelle montrant la partie de droite de la figure 1 ;

La figure 5 est une vue en coupe effectuée selon la ligne V-V de la figure 4 ;

La figure 6 est une vue partielle, en perspective éclatée, montrant un détail de réalisation.

En se reportant aux dessins, on voit que le corps du robinet est constitué par un boîtier 1 cylindrique sur le fond 2 duquel sont raccordées les canalisations 3 et 4 respectivement d'arrivée d'eau chaude et froide.

Selon l'invention, les canalisations 3 et 4 débouchent chacune dans une chambre 5 normalement obturée par une bille 6.

Chaque bille est plaquée contre son siège par l'action conjuguée de la pression de l'eau et d'un ressort 7 logé dans la chambre 5.

Pour que l'eau pénètre dans le corps du robinet, il faut repousser les billes 6 vers la canalisation. Ce résultat est obtenu lors de la mise en place des organes actifs du robinet qui constituent une cartouche comportant, notamment, un boîtier 8 pourvu d'un fond 9 et obturé par un bouchon 10, ledit boîtier renfermant le clapet 11 porté par un piston 12 pouvant être déplacé dans un pot 13 formant en combinaison avec ledit piston une chambre de temporisation 14 communiquant avec l'arrivée d'eau par l'entremise d'un trou calibré 15.

Selon une autre caractéristique de l'invention, l'eau provenant des canalisations 3 et 4 parvient au boîtier 8 en traversant des filtres 16 et des clapets anti-retour 17 à queues de guidage cruciformes, logés dans le fond 9 du boîtier.

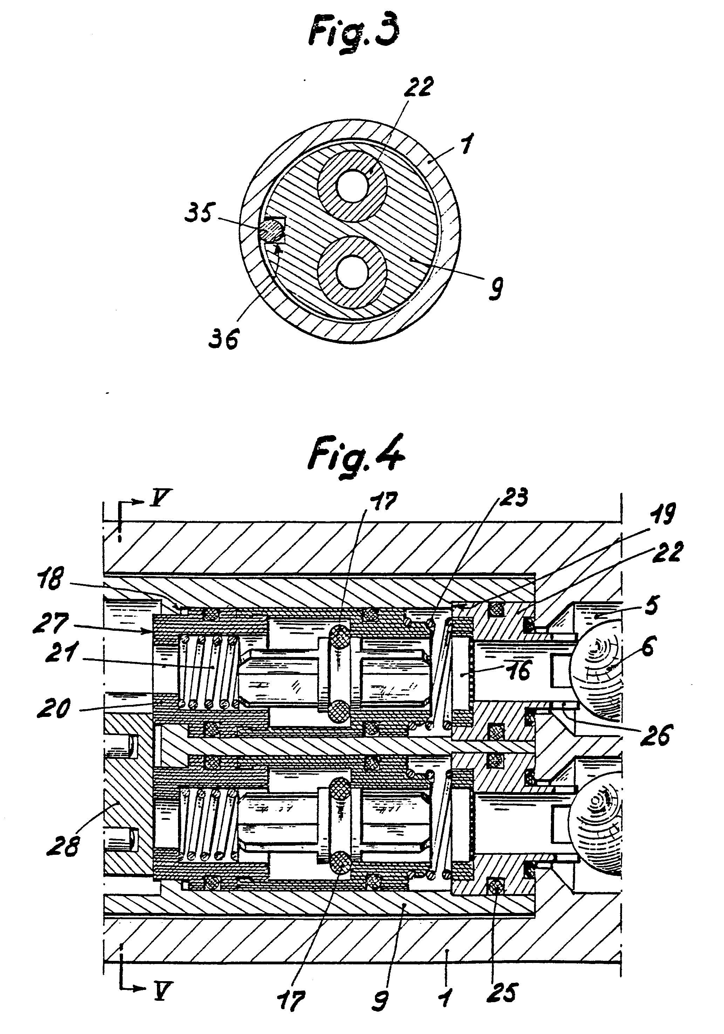

Selon un mode de réalisation, le fond 9 du boîtier présente deux alésages comportant chacun deux épaulements respectivement 18 et 19 (figure 4).

Le premier épaulement sert d'appui à une bague 20 de retenue du ressort 21 du clapet anti-retour 17 tandis que le second épaulement 19 limite l'enfoncement dans le fond 9 d'une seconde bague 22 de retenue du filtre 16 qui est appliqué contre ladite bague par un ressort 23. Pratiquement, la bague 20 est réalisée par l'association par clipsage de deux bagues formant un boîtier dans lequel sont enfermés le clapet 17 et le ressort 21, comme cela ressort tout particulièrement de la figure 4.

Lorsque l'écrou 24 de fixation de la cartouche dans le corps est dévissé, le maintien des bagues 22 dans le fond 9 est assuré par la friction engendrée par les joints d'étanchéité 25 qui est supérieure à la force des ressorts 23.

Chaque bague 22 présente une extension tubulaire fendue 26 susceptible de pénétrer dans le logement 5 du fond du corps en repoussant la bille 6.

Selon une autre caractéristique de l'invention, les extrémités 27 (figure 4) des bagues 20 débouchant dans le boîtier 8 forment une glace contre laquelle est appliqué un bossage 28 excentré situé à l'extérieur du fond du pot 13 qui peut pivoter autour de son axe.

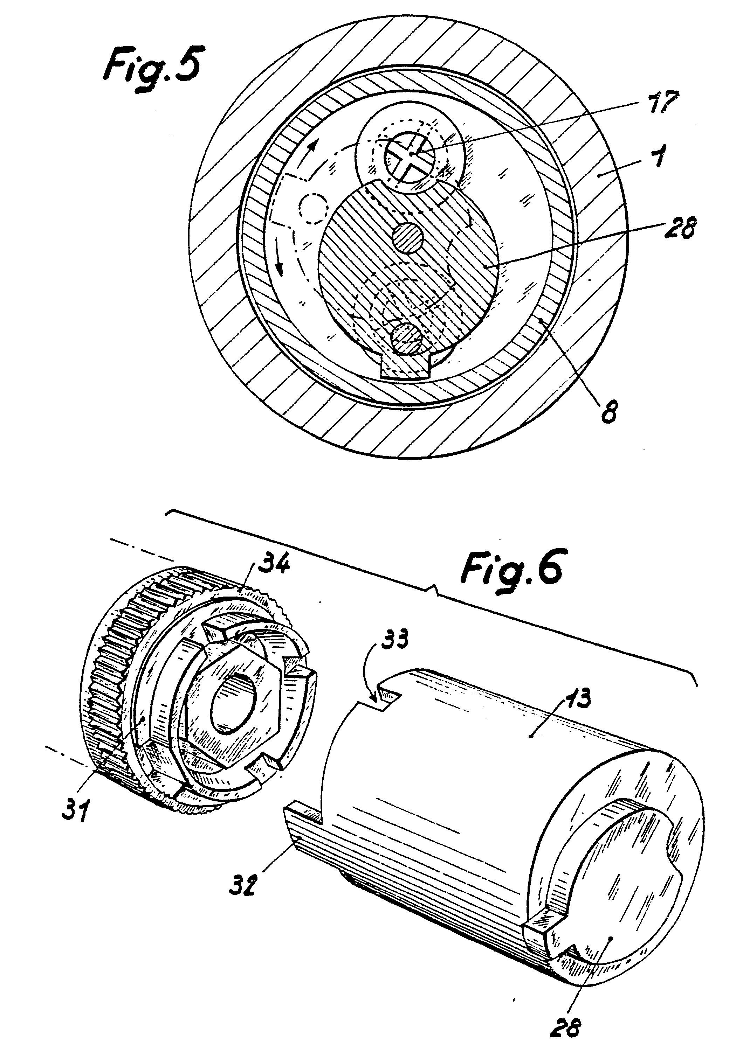

Comme montré sur la figure 5, la forme et la disposition du bossage 28 sont telles que, par la rotation du pot 13 ledit bossage peut obturer l'un ou l'autre des orifices dans les bagues 20 ou partiellement les deux.

Il ressort donc que, selon l'invention, le pot, outre sa fonction connue de chambre de temporisation a aussi celle de régler la température du mélange en limitant le débit de chacune des arrivées d'eau.

La tête de manœuvre 29, dont l'enfoncement permet d'ouvrir le clapet 11, peut entraîner en rotation un manchon tubulaire 30, pourvu d'une tête 31 sur laquelle est engagé, légèrement à force, le pot 13 qui présente un ergot 32 d'entraînement (figure 6).

L'eau mitigée parvient au clapet 11 en pénétrant dans le pot 13 par l'entremise d'encoches 33 de ces dernières.

Une bague filetée 34 montée sur la tête 31 permet de régler la section des encoches et, par suite, le débit de l'eau mitigée.

Bien entendu, la présente invention ne se limite pas au mode de réalisation décrit et représenté mais s'étend, au contraire, à toutes variantes de formes et dimensions.

C'est ainsi, entre autres, que le positionnement du boîtier 8 dans le corps 1 est assuré par un doigt 35 du fond 2 dudit corps s'engageant dans une rainure 36 du fond 9 dudit boîtier (figure 3).

## Revendications

1. Robinet mélangeur du genre de ceux qui comportent des clapets (17) anti-retour et des filtres (16) du côté des canalisations d'arrivée d'eau chaude et d'eau froide (3 et 4) et dont le clapet (11) du robinet et le mécanisme de temporisation sont logés dans une cartouche (8, 9, 10), caractérisé en ce que la cartouche précitée est constituée par un boîtier (8) pourvu d'un fond (9) et renferme, outre le clapet (11) du robinet et le mécanisme de temporisation, les clapets (17) anti-retour et les filtres (16) et en ce que les canalisations d'arrivée d'eau chaude et d'eau froide (3 et 4) se raccordent au robinet par l'entremise de clapets à bille (6) poussés contre leur siège en position fermée par la pression de l'eau, lesdits clapets à bille étant logés dans le corps (1) du robinet et l'ouverture desdits clapets à bille étant réalisée par la mise en place de la cartouche (8, 9, 10).

2. Robinet mélangeur selon la revendication 1, caractérisé en ce que le fond du boîtier présente deux alésages présentant chacun deux épaulements (18-19), le premier épaulement servant d'appui à une bague (20) de retenue du ressort (21) du clapet anti-retour tandis que le second épaulement limite l'enfoncement dans ledit fond d'une seconde bague (22) de retenue du filtre qui est appliqué contre ladite bague par un ressort (23).

3. Robinet mélangeur selon la revendication 2 et du genre de ceux dont la cartouche présente des extensions tubulaires pour repousser les clapets à bille (6), caractérisé en ce que chaque extension (26) tubulaire et fendue est portée par la bague (22) de retenue du filtre correspondant.

4. Robinet mélangeur, selon l'une quelconque des revendications 1 à 3, caractérisé en ce qu'un pot (13) coopérant à former la chambre de temporisation du mélange, est utilisé pour régler la température de l'eau mitigée.

5. Robinet mélangeur, selon la revendication 4, caractérisé en ce que le pot est entraîné en rotation à partir du bouton de manœuvre et présente à l'extérieur de son fond un bossage (28) susceptible d'obturer totalement ou en partie les orifices dans les bagues de retenue des ressorts des clapets anti-retour.

## Claims

1. Mixer tap of the kind which includes non return valves (17) filters (16) on the same side as the hot water and cold water intake ducts (3 and 4) and in which the valve (11) of the tap and the timing mechanism are housed in a cartridge (8, 9, 10), characterized in that said cartridge is formed by a case (8) having a bottom (9) and contains, besides the valve (11) of the tap and the timing mechanism, the non return valves (17) and the fibers (16) and in that the hot water and cold water intake ducts (3 and 4) are connected to the tap through ball valves (6) urged against their seat in the closed position by the pressure of the water, said ball valves being housed in the body (11) of the tap and opening of said ball valves being achieved by positioning the cartridge (8, 9, 10).

2. Mixer tap according to claim 1, characterized in that the bottom of the case has two bores each with two shoulders (18-19), the first shoulder serving as support for a ring (20) retaining the spring (21) of the non return valve whereas the second shoulder limits the distance by which a second ring (22) is driven into said bottom, said ring retaining the filter which is applied thereagainst by a spring (23).

3. Mixer tap according to claim 2, and of the kind whose cartridge has tubular extensions for pushing back the ball valves (6), characterized in that each tubular and split extension (26) is supported by the ring (22) retaining the corresponding filter.

4. Mixer tap according to any one of claims 1 to 3, characterized in that a pot (13) cooperating to form the mixing timing chamber is used for adjusting the temperature of the mixed water.

5. Mixer valve according to claim 4, characterized in that the pot is rotated from the operating knob and has externally of its bottom a boss (28) adapted for completely or partially closing the orifices in the rings retaining the springs of the non return valves.

## Patentansprüche

1. Mischhahn der Bauart, die auf der Warm- und Kaltwasserzuleitungsseite (3 und 4) Rückschlagventile (17) und Filter (16) besitzen und deren Hahnventil (11) und Verzögerungsmechanismus in einem Kartuscheneinsatz (8, 9, 10) lagern, dadurch gekennzeichnet, daß der besagte Kartuscheneinsatz aus einem Gehäuse (8) und einem Boden (9) besteht und außer dem Hahnventil (11) und dem Verzögerungsmechanismus die Rückschlagventile (17) und Fasern (16) enthalten, sowie dadurch, daß die Warm- und Kaltwasserzuleitungen (3 und 4) über Kugelventile (6) an den Hahn angeschlossen werden, die in geschlossenem Zustand durch den Wasserdruck gegen ihren Sitz gedrückt werden, daß die besagten Kugelventile in dem Hahngehäuse (1) sitzen und das Öffnen der besagten Kugelventile durch die Anbringung des Kartuscheneinsatzes (8, 9, 10) erfolgt.

2. Mischhahn entsprechend Patentanspruch 1, dadurch gekennzeichnet, daß der Boden des Gehäuses 2 Bohrungen aufweist, von denen jede 2 Schultern (18, 19) besitzt, deren erste als Auflage für einen Rückhaltering (20) der Rückschlagventilfeder (21) dient, während die zweite Schulter ein Versenken des Filterrückhalterings (22) in besagten Boden verhindert, da der Filter durch eine Feder (23) gegen den Ring gepreßt wird.

3. Mischhahn gemäß Patentanspruch 2 und der Bauart, deren Kartuscheneinsatz rohrförmige Verlängerungen zum Zurückschieben der Ventilkugeln (6) besitzen, dadurch gekennzeichnet, daß jede der rohrförmigen und geschlitzten Verlängerungen (26) von dem jeweiligen Filterrückhaltering (22) getragen wird.

4. Mischhahn entsprechend einem beliebigen der Patentansprüche 1 bis 3, dadurch gekennzeichnet, daß ein Topf (13), der dazu beiträgt, die Mischverzögerungskammer zu bilden, zur Termeraturregelung des gemischten Wassers verwendet wird.

5. Mischhahn entsprechend Patentanspruch 4, dadurch gekennzeichnet, daß der Topf durch Drehen des Handgriffs rotierend bewegt wird und auf der Außenseite seines Bodens einen Buckel (28) aufweist, um die Öffnungen in den Rückhalteringen der Rückschlagventilfedern ganz oder teilweise zu verschließen.

Fig.1

Fig.2

# Fig.3

# Fig.4

Fig.5

Fig.6